Europäisches Patentamt

European Patent Office

Office européen des brevets

(19)

(11) Publication number: **0 019 331
B1**

(12) **EUROPEAN PATENT SPECIFICATION**

(45) Date of publication of patent specification: **20.07.83**   (51) Int. Cl.³: **A 22 B 3/06**

(21) Application number: **80200418.4**

(22) Date of filing: **02.05.80**

(54) An apparatus for electrically stunning animals to be slaughtered.

(30) Priority: **10.05.79 NL 7903680**

(43) Date of publication of application:
**26.11.80 Bulletin 80/24**

(45) Publication of the grant of the patent:
**20.07.83 Bulletin 83/29**

(84) Designated Contracting States:
**AT BE CH DE FR GB IT LI LU NL SE**

(56) References cited:
**NL - A - 7 705 519
US - A - 3 123 852**

(73) Proprietor: **MACHINEFABRIEK G.J. NIJHUIS B.V.
Parallelweg 4
NL-7102 DE Winterswijk (NL)**

(72) Inventor: **Nijhuis, Johan Willem
Haitsma Mulierweg 53
Winterswijk (NL)**

(74) Representative: **van der Beek, George Frans, Ir.
et al,
Nederlandsch Octrooibureau P.O. Box 29720
NL-2502 LS The Hague (NL)**

Courier Press, Leamington Spa, England.

An apparatus for electrically stunning animals to be slaughtered

The invention relates to an apparatus for electrically stunning animals to be slaughtered, in particular pigs, comprising two endless conveyors, said conveyors being operable to run parallel to each other and at a synchronized rate and being positioned to form a substantially V-shaped passage way therebetween, as well as a pair of electrodes or sects of electrodes, said electrodes being adapted to engage the head of the animals, said electrodes furthermore being adapted to extend downwardly into said V-shaped passage way at some distance from each other seen in the direction of movement of said conveyors, which electrodes can be pushed of said passage way against spring pressure by rotation about horizontal shafts arranged above the conveyors, the first electrode or set of electrodes in its initial position extending downwardly in the direction of movement of the conveyors.

An apparatus of this type is known from French patent specification 2,390,903.

In electrically stunning animals to be slaughtered, in particular pigs, it is of utmost importance that a proper contact is attained between the animals to be stunned and the electrodes. The jolt of current used to stun the animal should be short and intense.

In case of insufficient stunning muscular contractions may cause internal bleeding and bone breakage which distract from the value of the meat.

Too long an irregular contact which is insufficient in the beginning will cause a stress condition in the animal whereby the pH of the meat will change such changes being detrimental, too. A short jolt of high current is necessary which jolt of current has to be applied as soon as a proper contact between the electrodes and the animal is achieved.

In an apparatus for electrically stunning animals to be slaughtered a high production level of for instance on the order of 300 to 600 pigs per hour is desired.

However, the animals to be stunned are of different size which will lead in particular to a different level of heights of the animals between the V-shaped conveyors whereas contrary thereto the size of the heads of the animals will differ in a lesser degree. Some animals will try to escape from the electrodes by moving their head downwardly or aside.

The object of the invention is now to improve the known apparatus in such a way that a good contact is achieved at the proper place under all circumstances.

According to the invention this object is attained in that said first electrode and said second electrode in their initial positions extend downwardly with the first electrode towards the second electrode and with the second electrode downwardly and backwards such that the second electrode extends tangentially to a circle concentric with the circle of movement of the outer end of the first electrode, said first electrode having a relatively short electrode surface at the end of the lower side of said electrode, whereas the second electrode has an electrode surface over substantially the entire side thereof facing said first electrode.

Upon transportation of the animals towards the electrodes by means of the conveyors and independent of their size every animal to be stunned will push the first electrode or electrodes upwards with the outer end of said electrode or electrodes in engagement with the head of the animal. Apart from the size of the animal the first electrode or electrodes also may be lifted by movements of the head of the animal.

All said movements created by differences in size of the animals are movements of the heads upwardly or downwardly result in a movement of the outer end of the first electrode or electrodes such with respect to the initial position of the second electrode that the distance between first and second electrode is only changed in a way which can be neglected.

This has the result that when the animal's snout touches the second electrode both electrodes are always in the proper position with respect to the head of the animal irrespective of the level at which the first electrode has been lifted. With proper adjustment of the electrodes behind each other the current which has to pass through the head of the animal to be stunned will substantially always pass through a portion of the head having always substantially the same length. This is of importance for proper stunning of the animals.

The invention will now be elucidated in detail with reference to the drawings.

Fig. 1 shows a side elevation of the electrode arrangement according to the invention.

Fig. 2 shows a vertical cross section along the line II—II in Fig. 1.

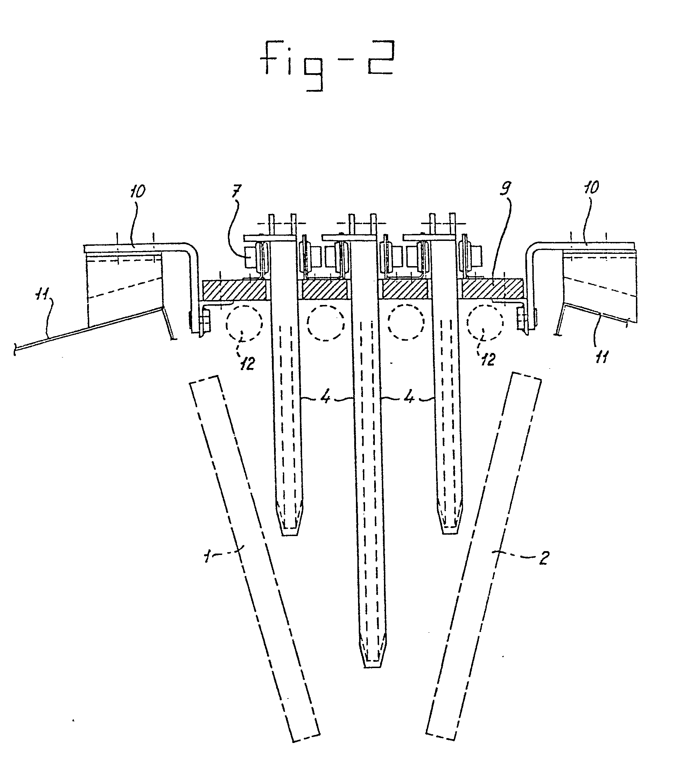

In Fig. 2 there has been given a diagrammatical representation only of the conveyors 1 and 2, which conveyors have been positioned to form a V-shaped passage way therebetween.

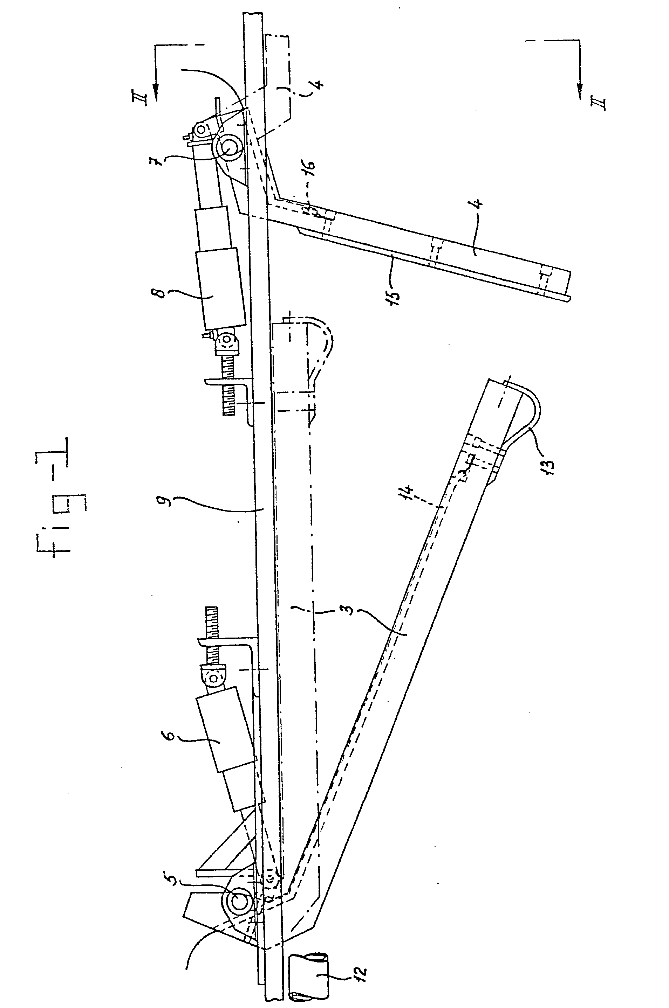

With reference to Fig. 1 there has been shown a first set of electrodes 3 and a second set of electrodes 4 each one of said sets consisting of three separate electrodes like has been shown in Fig. 2 said electrodes extending to the passageway between the conveyors 1 and 2 in such a manner that the main part of this passageway is covered.

Independent from each other the electrodes 3 are operable to swing about a horizontal shaft 5, while being coupled to a spring 6.

In a similar way the electrodes 4 are operable to swing about a horizontal shaft 7 while being coupled to a spring 8.

The bearings of the shafts 5 and 7 and the springs have been fastened to a plate 9, said plate 9 being fastened by means of supports 10 to the frame 11 (not shown in detail) of the conveyor apparatus. At 12 tubes have been indicated by interrupted circles which tubes may form an upper restriction of the conveyor apparatus.

At the lower end thereof each one of the electrode arms 3 is provided with a short bent electrode portion 13 said electrode portion being connected to a cable 14 provided in the pertaining arm.

At the side facing the first electrode each one of the electrode arms 4 is covered by a conductive electrode 15 over substantially the entire height of said arm, said electrode 15 being connected to a cable 16.

The set of electrodes may be swung upward entirely to the horizontal position in order to provide a passage for the stunned animal. In the drawing Fig. 1 shows both the sets of electrodes in the initial position. An animal arriving from the left hand side will push the arm 3 including the electrodes 13 upward without causing a substantial change in distance between the electrode arms 4 and the electrodes 15. As soon as the animal engages an electrode 15 the current circuit will be closed.

The basic distance between the sets of electrodes may be adjusted in the longitudinal direction of the conveyor by displacing one set thereof on the plate 9 and adjusting the same in another position. Furthermore it is conceivable to switch in the jolt of current only if the animal has displaced the second electrode over a centain angle and not automatically at the moment that the animal engages both electrodes.

## Claim

An apparatus for electrically stunning animals to be slaughtered in particular pigs, comprising two endless conveyors (1, 2) said conveyors (1, 2) being operable to run parallel to each other and at a synchronized rate and being positioned to form a substantially V-shaped passage way therebetween, as well as a pair of electrodes (3, 4) or sets of electrodes, said electrodes (3, 4) being adapted to engage the head of the animals, said electrodes (3, 4) furthermore being adapted to extend downwardly into said V-shaped passage way at some distance from each other seen in the direction of movement of said conveyors, which electrodes can be pushed out of said passage way against spring pressure (6, 8) by rotation about horizontal shafts (5, 7) arranged above the conveyors (1, 2), the first eiectrode (3) or set of electrodes in its initial position extending downwardly in the direction of movement of the conveyors (1, 2), characterized in that said first electrode (3) and said second electrode (4) in their initial positions (Fig. 1) extend downwardly with the first electrode (3) towards the second electrode (4) and with the second electrode (4) downwardly and backwards such that the second electrode (4) extends tangentially to a circle concentric with the circle of movement of the outer end of the first electorde (3), said first electrode (3) having a relatively short electrode surface (13) at the end of the lower side of said electrode, whereas the second electrode (4) has an electrode surface (15) over substantially the entire side thereof facing said first electrode (3, 13).

## Patentanspruch

Vorrichtung zur elektrischen Betäubung von Schlachttieren, insbesondere Schweinen, bestehend aus zwei endlosen Förderbändern (1, 2), wobei die Förderbänder (1, 2) parallel zueinander und mit synchronisierter Geschwindigkeit laufend betreibbar und unter Bildung eines im wesentlichen V-förmigen Durchlasses angeordnet sind, sowie aus einem Paar von Elektroden (3, 4) oder Elektrodensätzen, wobei die Elektroden (3, 4) zur Anlage an den Kopf der Tiere und weiter dazu ausgelegt sind, sich, in Bewegungsrichtung der Förderbänder gesehen, in einigem Abstand voneinander nach unten in den V-förmigen Durchlaß zu erstrecken, woebi die Elektroden gegen den Druck von Federn (6, 8) durch Drehung um über den Förderbändern (1, 2) angeordnete horizontale Wellen (5, 7) aus dem Durchlaßweg herausgestoßen werden können und die erste Elektrode (3) oder der erste Elektrodensatz sich in seiner Anfangsstellung nach unten in der Bewegungsrichtung der Förderbänder (1, 2) erstreckt, dadurch gekennzeichnet, daß die erste Elektrode (3) und die zweite Elektrode (4) sich in ihren Anfangsstellungen (Fig. 1) nach unten erstrecken, wobei die erste Elektrode (3) gegen die zweite Elektrode (4) hin und die zweite Elektrode (4) so nach unten und hinten gerichtet ist, daß die zweite Elektrode (4) sich tangential an einen mit dem Bewegungskreis des Außenendes der ersten Elektrode (3) konzentrischen Kreis erstreckt, daß die erste Elektrode (3) eine relativ kurze Elektrodenfläche (13) an dem Ende der Elektroden-Unterseite besitzt, während die zweite Elektrode (4) eine im wesentlichen die gesamte der ersten Elektrode (3, 13) zugewendete Seite überdeckende Elektrodenfläche (15) besitzt.

## Revendication

Appareil pour étourdir électriquement des animaux destinés à l'abattage, en particulier des porcs, comprenant deux convoyeurs sans fin (1, 2), lesdits convoyeurs (1, 2) pouvant être actionnés pour se déplacer parallèlement entre eux et à une vitesse synchronisée et étant positionnés pour former entre eux une voie de passage profilée essentiellement en V, ainsi qu'une paire d'électrodes (3, 4) ou des groupes d'électrodes, lesdites électrodes (3, 4) étant agencées pour entrer en contact avec la tête des animaux, lesdites électrodes (3, 4) étant en outre agencées pour s'étendre vers le bas sur ladite voie de passage en forme de V à une certaine distance l'une de l'autre en considérant la direction de mouvement desdits convoyeurs, lesdites électrodes pouvant être repoussées de ladite voie de passage en opposition à une pression élastique (6, 8) par rotation autour d'arbres horizontaux (5, 7) placés au-dessus des convoyeurs (1, 2) la première électrode (3) ou le premier groupe d'électrodes s'étendant, dans sa position initiale, vers le bas dans la direction de mouvement des convoyeurs (1, 2), caractérisé en ce que ladite première électrode (3) et ladite second électrode (4) s'étendent, dans leurs positions initiales (fig. 1) vers le bas, la première électrode (3) étant orientée vers la seconde électrode (4) tandis que la seconde électrode (4) est orientée vers le bas et vers l'arrière de manière que cette seconde électrode (4) soit disposée tangentiellement à un cercle concentrique au cercle de déplacement de l'extrémité extérieure de la première électrode (3), ladite première électrode (3) ayant une surface d'électrode relativement courte (13) à l'extrémité du côté inférieur de ladite électrode tandis que la seconde électrode (4) comporte une surface d'électrode (15) s'étendant essentiellement sur tout son côté dirigé vers la première électrode (3, 13).

0 019 331

Fig-1

Fig. 1 — Bezugszeichen: 1, 3, 4, 5, 6, 7, 8, 9, 12, 13, 14, 15, 16; II

Fig-2